# EUROPÄISCHE PATENTSCHRIFT

(11) **EP 1 731 461 B1**
(45) Veröffentlichungstag und Bekanntmachung des Hinweises auf die Patenterteilung: **08.04.2009**
(21) Anmeldenummer: 06100429.7
(22) Anmeldetag: 17.01.2006
(51) Int. Cl.: B65H 27/00, D21F 1/40, F16C 13/00

(54) **Verfahren zur Herstellung einer Breitstreckwalze**
Process for producing an expander roller
Procédé pour la fabrication d'un rouleau élargisseur

(30) Priorität: 07.06.2005 DE 102005026332
(43) Veröffentlichungstag der Anmeldung: 13.12.2006
(73) Patentinhaber: Voith Patent GmbH, 89522 Heidenheim (DE)
(72) Erfinder: Gobec, Georg, 2700 Wr. Neustadt (AT); Bader, Benno, Dr., 2620 Mollram (AT); Gruber-Nadlinger, Thomas, 3442 Langenrohr (AT); Schrefl, Herbert, 3100 St. Pölten (AT); Gamsjäger, Norbert, Dr., 2721 Bad Fischau (AT)
(74) Vertreter: Kunze, Klaus

(56) Entgegenhaltungen:
- DE-A1-7102004 045 40
- US-A- 3 593 398

## Beschreibung

Die Erfindung betrifft ein Verfahren zur Herstellung einer Breitstreckwalze für eine Papiermaschine.

Breitstreckwalzen werden in bahnverarbeitenden Maschinen verwendet, um bei laufenden Materialbahnen eine Faltenbildung oder ein Durchhängen durch Breitstrecken der Materialbahnen zu vermeiden. Des weiteren werden Breitstreckwalzen dazu verwendet, parallel nebeneinander angeordnete Materialbahnen seitlich auseinander laufen zu lassen. Parallel nebeneinander angeordnete Materialbahnen können bspw. durch Längsschneiden einer breiten Materialbahn erzeugt werden.

Die aus dem Stand der Technik bekannten Breitstreckwalzen weisen üblicherweise einen gebogenen und stehenden Kern auf, auf welchem mehrere voneinander unabhängige Rollensegmente mittels Rollenlager abgestützt werden um eine gekrümmte Walze in mehreren Abschnitten nachzubilden.

Die o.g. Breitstreckwalzen sind aufwendig in ihrer Konstruktion und Wartung. Des weiteren ist bei den o.g. Breitstreckwalzen die Krümmung nicht einstellbar.

Aus der US 6,524,227 ist des weiteren eine Breitstreckwalze mit Kern und Außenmantel bekannt, wobei der Außenmantel fest mit dem Kern verbunden ist und eine Biegung der Breitstreckwalze durch Ausüben von Momenten auf die beiden längsseitigen Enden des Kerns bewirkt wird.

Bei Breitstreckwalzen dieser Art werden hohe Kräfte auf die Lagerung ausgeübt, was einen hohen Lagerverschleiß zur Folge haben kann. Des weiteren ist bei diesen Breitstreckwalzen der Einstellbereich der Krümmung sehr limitiert, da die Krümmung durch die Biegung des Kerns festgelegt wird.

Aus der deutschen Patentanmeldung mit der Anmeldenummer 10 2004 026 535.6 (Bem: dies ist unsere Breitstreckwalzenanmeldung) WO 2005/115894 ist eine Breitstreckwalze bekannt bei welcher das Außenrohr, dort mit Außenmantel bezeichnet, abschnittweise relativ zum Kern, welcher ein Innenrohr umfasst, senkrecht zu dessen Längsachse verschieblich gelagert ist, so dass das Außenrohr in eine Position bringbar ist, in der dessen Längsachse relativ zur Längsachse des Kerns gekrümmt verläuft.

Es ist die Aufgabe der vorliegenden Erfindung ein einfaches und somit kostengünstiges Verfahren zur Herstellung der letztgenannten Breitstreckwalze vorzuschlagen, bei dem des weiteren die jeweils gewünschten Eigenschaften einfach bei der Herstellung einzustellen sind.

Die Aufgabe wird durch die Merkmale des Patentanspruchs 1 gelöst.

Beim erfindungsgemäßen Verfahren zur Herstellung einer ein Innenrohr und ein das Innenrohr zumindest abschnittweise ummantelndes und abschnittweise relativ zu diesem bewegbaren Außenrohr umfassenden Breitstreckwalze sind folgende Schritte vorgesehen:
a) Bereitstellen eines ersten Formkörpers, welcher die Kontur des herzustellenden Innenrohrs aufweist,
b) Anbringen eines ersten polymeren Harzmaterials an den ersten Formkörper, zur Bildung des Innenrohrs, wobei das Innenrohr zumindest einen Bereich mit einem maximalen Durchmesser umfasst,
c) zumindest abschnittweises Bereitstellen eines zweiten Formkörpers auf dem gebildeten Innenrohr außerhalb des zumindest einen Bereichs mit dem maximalen Durchmesser,
d) Aufbringen eines zweiten polymeren Harzmaterials auf den zweiten Formkörper und auf dem Innenrohr im Bereich seines maximalen Durchmessers, wodurch das Außenrohr gebildet und das Außenrohr im Bereich des maximalen Durchmessers des Innenrohrs mit dem Innenrohr verbunden wird,
e) Entfernen des abschnittweise zwischen dem Innenrohr und dem Außenrohr angeordneten zweiten Formkörpers.

Unter dem maximalen Durchmesser der Innenrohrs ist in diesem Zusammenhang dessen maximaler Außendurchmesser zu verstehen.

Durch die Bereitstellung des ersten Formkörpers ist es möglich, auf einfache Weise das Innenrohr aus dem polymeren Harzmaterial zu bilden. Durch die Bereitstellung des zweiten Formkörpers außerhalb des zumindest einen Bereichs des Innenrohrs mit dem maximalen Durchmesser ist es möglich, das Außenrohr auf einfache Art und Weise auf dem Innenrohr zu bilden und dieses im Bereich des maximalen Durchmessers des Innenrohr mit dem Innenrohr zu verbinden. Somit ist es möglich, abhängig davon ob der erste Formkörper nach der Herstellung des Innenrohr mit diesem ein integrales Bauteil bildet oder nicht, die Eigenschaften, wie bspw. Eigenfrequenz oder Biegesteifigkeit, des Kerns individuell einzustellen.

Durch die Bereitstellung von erstem und zweitem polymerem Harzmaterial zur Bildung des Innen- und des Außenrohrs kann, da zwischen einer Vielzahl von Harzmaterialien gewählt werden kann und diese wiederum mit partikelförmigen und / oder faserförmigen Füllmaterialien versetzt werden können, eine extrem breite Variationsmöglichkeit zur Einstellung der Eigenschaften der herzustellenden Breitstreckwalze für deren jeweiligen Einsatzzweck erreicht werden.

Der erste Formkörper kann hierbei nach der Herstellung des Innenrohrs zur Bildung des Kerns der Breitstreckwalze mit diesem verbunden bleiben, d.h. einen Verbundkörper bilden. Erfindungsgemäß ist es aber auch möglich, dass der Formkörper nach der Herstellung des Innenrohrs von diesem wieder entfernt wird, so dass der Kern im wesentlichen nur durch das Innenrohr gebildet wird. Auch hierdurch ist es möglich, abhängig vom jeweiligen Einsatzzweck der herzustellenden Breitstreckwalze, die Eigenschaften entsprechend einzustellen.

Es sind verschiedene Konturen denkbar, die das herzustellende um seine Längsachse rotationssymmetrisch ausgebildete Innenrohr haben kann. Gemäß einer ersten Ausführungsform ist die Kontur des ersten Formkörpers derart, dass das gebildete Innenrohr im Bereich der Mitte seiner Längserstreckung den maximalen Durchmesser hat und sich in Richtung seiner beiden längsseitigen Enden zumindest abschnittweise verjüngt, bevorzugt konisch verjüngt.

Gemäß einer anderen ebenfalls bevorzugten Ausgestaltung der Erfindung ist die Kontur des ersten Formkörpers derart, dass das gebildete Innenrohr im Bereich der beiden längsseitigen Enden den maximalen Durchmesser hat und sich davon ausgehend jeweils in Richtung zur Mitte in Längsrichtung zumindest abschnittweise verjüngt, insbesondere konisch verjüngt.

Vorzugsweise umfasst das das Innen und / oder das Außenrohr bildende Material ein Faserverbundmaterial. Eine bevorzugte Ausgestaltung der Erfindung sieht daher vor, dass bei der Herstellung des Innenrohrs in das erste polymere Harzmaterial erstes Fasermaterial zur Bildung eines ersten Faserverbundmaterials eingebettet wird und / oder dass bei der Herstellung des Außenrohrs in das zweite polymere Harzmaterial zweites Fasermaterial zur Bildung eines zweiten Faserverbundmaterials eingebettet wird.

Selbstverständlich kann das erste Harzmaterial eine oder mehrere polymere Harzkomponenten umfassen, wie auch das zweite polymere Harzmaterial eine oder mehrere polymere Harzkomponenten umfassen kann, so dass im Ergebnis das erste und das zweite polymere Harzmaterial gleich oder unterschiedlich sein können.

Des weiteren kann das erste Fasermaterial eine oder mehrere Faserkomponenten umfassen, wie auch das zweite Fasermaterial eine oder mehrere Faserkomponenten umfassen kann. Das erste und das zweite Fasermaterial können gleich oder zueinander verschieden sein.

Als Faserkomponenten können beispielsweise in Betracht kommen: organische Fasern, wie beispielsweise Carbonfasern, Aramidfasern, Thermoplastfasern (PE, PES, PP, PPS, PEEK, PVF, PVDF), Duroplastfasern (Epoxy, Cyanatester) und Elastomerfasern (Gummi, Polyurethan) wie auch anorganische Fasern wie beispielsweise Glasfasern, Keramikfasern, Metallfasern aber auch Gesteinsfasern wie beispielsweise Basaltfasern. Es sind aber auch Hybride der einzelnen Materialgruppen denkbar.

Durch die Bereitstellung von Faserverbundmaterialien kann eine Vielzahl von Eigenschaften der Breitstreckwalze eingestellt werden. So wird beispielsweise die Biegesteifigkeit, das Schwingungsverhalten usw. des Innen- wie des Außenrohrs entscheidend durch die verwendeten Fasermaterialien, der Orientierung der Fasermaterialien zueinander und zur Längsachse und durch das verwendete polymere Harzmaterial beeinflusst.

Zur Einstellung weiterer Eigenschaften des Innen- bzw. Außenrohrs ist es des weiteren sinnvoll, wenn das erste Harzmaterial ersten partikelförmigen Füllstoff und / oder dass das zweite polymere Harzmaterial zweiten partikelförmigen Füllstoff umfasst, wobei jeweils der erste wie auch der zweite partikelförmige Füllstoff mehrere Füllstoffkomponenten umfassen kann.

Soll das Außenrohr als Zylinder mit entlang seiner Längserstreckung zumindest abschnittsweise gleichem Durchmesser, dieser entspricht im wesentlichen dem maximalen Durchmesser des Innenrohrs zuzüglich der Wandstärke des Außenrohrs, hergestellt werden, ist es sinnvoll, wenn Schritt c) wie folgt durchgeführt wird: abschnittweises Bereitstellen eines zweiten Formkörpers auf dem gebildeten Innenrohr derart, dass durch den zweiten Formkörper zumindest abschnittweise die Kontur des gebildeten Innenrohrs zum maximalen Durchmesser des Innenrohrs ausgeglichen wird.

In diesem Zusammenhang sei darauf hingewiesen, dass unter einem Formkörper im Wesentlichen der Bereich eines Gegenstandes zu betrachten ist, der zur Formgebung des Innen- bzw. Außenrohrs beiträgt.

Es sind unterschiedlichste Materialien denkbar, aus denen die Formkörper hergestellt werden kann. Vorzugsweise umfassen der erste und / oder der zweite Formkörper allein oder in Kombination folgende Materialien: Holz, Metall, Schaummaterial, insbesondere Polyurethanschaum, Polystsrolschaum oder Metallschaum. Es sind des weiteren auch andere organische und anorganische Schaummaterialien, insbesondere lösliche Schaummaterialien denkbar.

Vorzugsweise wird der erste und / oder der zweite Formkörper zumindest teilweise durch ein Rotationsgussverfahren hergestellt. Das Rotationsgussverfahren stellt eine besonders einfache und kostengünstige Methode zur Herstellung der Formkörper dar und bietet vielseitige Gestaltungsmöglichkeiten bei der Herstellung der Formkörper.

Das Schaummaterial weist insbesondere eine Dichte im Bereich 0,05 g/cm³ bis 6g/cm³, vorzugsweise 0,1g/cm³ bis 0,3g/cm³ auf. Zur Herstellung des aus Schaummaterial gebildeten Formkörpers wird dieses vorzugsweise mittels Spachteln, Gießen oder Rakeln auf einen Wickelkern mit geringer Dichte aufgetragen, welcher bspw. aus Aluminium, Kunststoff oder Stahl- in diesem Fall ist der Wickelkern bspw. ein Hohlkern- gefertigt ist. Es ist aber auch möglich, vorgefertigte Halbzeuge, die z.B. aus Schaummaterial hergestellt sind, bspw. in Form von Scheiben, Zylindern oder dergleichen auf den Wickelkern aufzubringen.

Die Verwendung von Schaummaterial zur Herstellung des Formkörpers ist insbesondere dann sinnvoll, wenn der Walzenkern durch den Formkörper und das Innenrohr gebildet wird, d.h. das Innenrohr und der Formkörper nach der Herstellung des Innenrohrs einen Verbundkörper bilden. Wie Versuche gezeigt haben, können Schwingungen der Breitstreckwalze im Betrieb weitestgehend unterbunden werden, wenn die Eigenfrequenz des Walzenkerns möglichst hoch ist. Dies kann dadurch erreicht werden, indem das Elastizitätsmodul des Walzenkerns hoch und dessen Masse gering ist. Ein geringe Eigenfrequenz kann beispielsweise dadurch erreicht werden, indem der mit dem Innenrohr verbunden bleibende Formkörper aus einem Schaummaterial und das Innenrohr aus einem Faser-Verbundmaterial hergestellt wird.

Nach einer weiteren bevorzugten Weiterbildung der Erfindung ist der erste Formkörper konvex gekrümmt und wird zur Bildung des Innenrohrs zumindest abschnittweise von dem ersten Harzmaterial ummantelt.

Ein konvexer Formkörper wird vorzugsweise dadurch erzeugt, indem, wie oben bereits beschrieben, beispielsweise ein Schaummaterial auf den Wickelkern aufgebracht wird, welches anschließend wieder teilweise zum Erreichen der Kontur des Formkörpers entsprechend abgetragen wird. Eine bevorzugte Ausgestaltung der Erfindung sieht demzufolge vor, dass die Kontur des ersten und / oder des zweiten Formkörpers durch mechanische Bearbeitung, insbesondere Abdrehen oder Schleifen, eines um seine Längsachse rotierenden Formkörperrohlings erzeugt wird.

Der konvexe Formkörper kann auch mittels einer Hülsenform gefertigt werden, welche die Kontur des herzustellenden Formkörpers aufweist. Beispielhaft ist in diesem Zusammenhang eine Gummihülsenform zu nennen, welche beispielsweise über den oben beschriebenen Formkörperrohling gezogen wird und anschließend zur Einstellung dessen Kontur lokal unterschiedlich stark mit Druck beaufschlagt wird, wodurch die Bereiche mit höherer Druckbeaufschlagung stärker komprimiert werden als solche mit geringerer Druckbeaufschlagung.

Der konvexe Formkörper kann auch dadurch erzeugt werden, dass Scheiben unterschiedlicher Durchmesser und / oder unterschiedlicher Materialien (z.B. mit unterschiedlicher Steifigkeit) in Längsrichtung des Wickelkerns nebeneinander liegend auf diesen aufgereiht werden.

Ist der erste bzw. zweite Formkörper konvex ausgebildet, so wird das erste und / oder das zweite Faserverbundmaterial vorzugsweise durch ein Faser-Wickelverfahren auf den jeweils konvexen Formkörper aufgebracht. Als mögliche Wickelverfahren sind in diesem Zusammenhang nicht abschließend zu nennen: Filament winding und Tape winding.

Es sind aber auch andere Verfahren denkbar, das Faser-Verbundmaterial auf den jeweiligen Formkörper aufzubringen. Nicht abschließend sollen genannt werden: Resin fusion molding, Resin transfer molding, Faserspritzen, Prepreg Methode, wie z.B. ummanteln des Formkörpers mit zumindest einer schlauchförmigen in polymerem Harz geträngten Gewebelage.

Nach einer weiteren Ausgestaltung der Erfindung ist es auch möglich, dass der erste Formkörper konkav gekrümmt ist, d.h. eine Art Schale bildet und dass in diesen zur Bildung des Innenrohrs das erste Harzmaterial zumindest bereichsweise eingebracht wird. Als mögliche Verfahren sind nicht abschließend zu nennen: Faserspritzen, Prepreg Methode, mit bahnförmigen und / oder schlauchförmigen Prepregs.

Bei den beiden letztgenannten Methoden kann der Formkörper beispielsweise zwei Halbschalen mit der Kontur des herzustellenden Innenrohrs haben, wobei in eine der beiden Halbschalen flächige oder schlauchförmige Prepregs eingelegt wird. In den Formkörper wird ein elastischer Schlauch so eingelegt, dass der Faser-Verbundwerkstoff zwischen dem Schlauch und dem Formkörper angeordnet ist und die Prepregs den elastischen Schlauch ummanteln. Anschließend wird der Formkörper durch die andere Halbschale geschlossen und der elastische Schlauch mit einem Gas befüllt und unter Druck gesetzt, so dass die Prepregs zur Bildung des Innenrohrs gegen den rotationssymmetrischen Formkörper gepresst werden. Die Fertigungsmethode kann bei der oben beschriebenen Methode derart abgeändert werden, dass anstelle der Halbschalen die Vakuum Sack Methode angewandt wird.

Wie bereits beschrieben, kann der erste Formkörper nach Bildung des Innenrohrs vom Innenrohr entfernt werden. Dies kann bei einem konkaven Formkörper dadurch geschehen, dass bspw. die beiden den Formkörper bildenden Halbschalen entfernt werden.

Ist der Formkörper ein konvexer Formkörper, der aus Schaummaterial gebildet ist, ist es beispielsweise denkbar, das gebildete Innenrohr mit zumindest einer Öffnung zu versehen und durch dieses ein Lösungsmittel zum Auflösen des Schaummaterial einzubringen. Hierdurch wird das Gewicht des Walzenkerns weiter verringert, wodurch die Eigenfrequenz erhöht und somit ein Schwingen der Breitstreckwalze verringert wird. Über die in das Innenrohr eingebrachte Öffnung können auch Gewichte zum Auswuchten des Walzenkerns eingebracht werden.

Zur Fertigstellung der Breitstreckwalze wird das Außenrohr vorzugsweise von einem Walzenbezug ummantelt, welcher vorteilhafterweise durch ein Beschichtungsverfahren auf das Außenrohr aufgebracht wird.

Nachfolgend soll das erfindungsgemäße Verfahren anhand der folgenden nicht maßstäblichen Zeichnungen näher erläutert werden. Es zeigen:

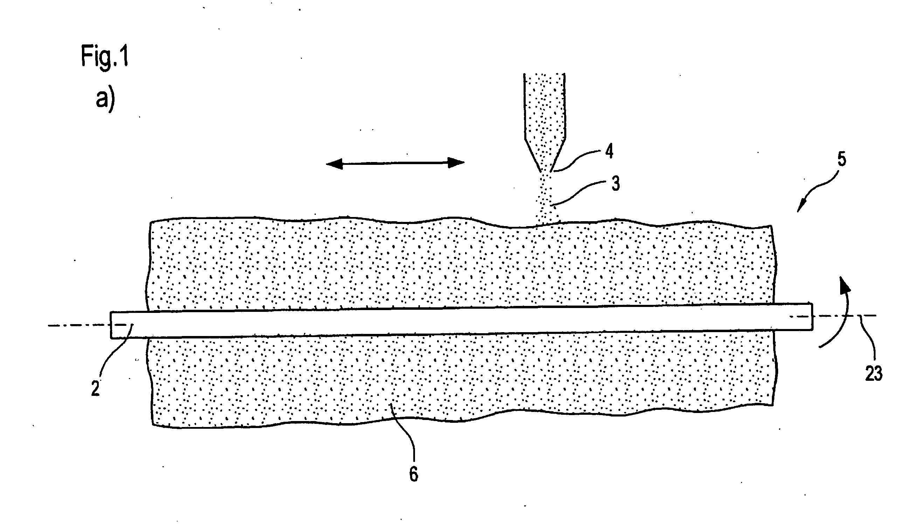

- Fig. 1a-1h: verschiedene Schritte einer Ausführungsform des erfindungsgemäßen Verfahrens.

Die Figur 1a zeigt einen Schritt des erfindungsgemäßen Verfahrens zur Herstellung eines ersten Formkörperrohlings 5, aus welchem im weiteren Verfahren ein erster Formkörper 1 gebildet wird. Der Formkörperrohling 5 wird mittels eines Rotationsgussverfahrens auf einen sich drehenden Wickelkern 2 hergestellt. Bei dem in der Figur 1a dargestellten Rotationsgussverfahren dreht sich der Wickelkern 2 um seine Längsachse 23 bei gleichzeitigem Aufgießen eines ersten Schaummaterials, einer Polyurethanschaummasse 3, aus einer entlang der Längserstreckung des Wickelkerns 2 traversierenden Düse 4. Hierdurch wird der Formkörperrohling 5 gebildet, der den Wickelkern 2 und einen den Wickelkern 2 ummantelnden Schaumkörper 6 aus Polyurethan umfasst.

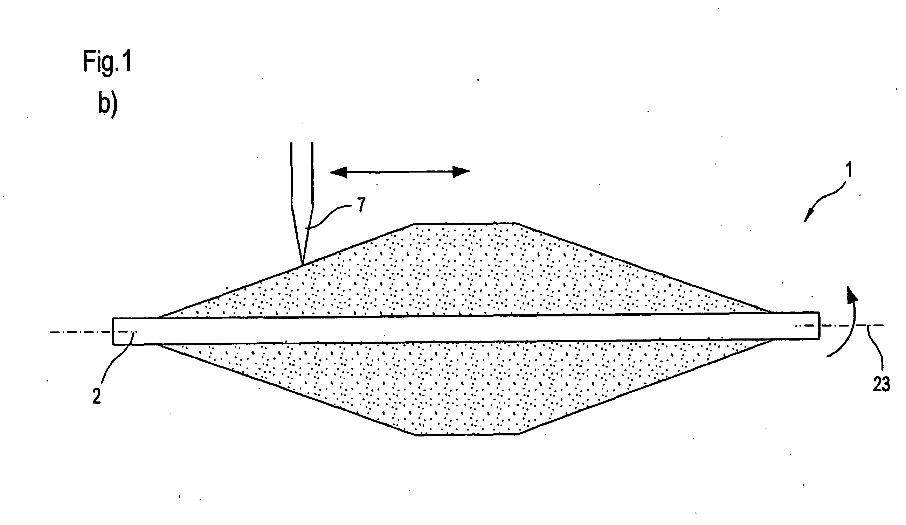

Die Figur 1b zeigt einen nachfolgenden Schritt des erfindungsgemäßen Verfahrens bei dem aus dem Formkörperrohling 5 der Formkörper 1 erzeugt wird.

Hierzu wird der Formkörperrohling 5 um seine Längsachse 23 rotiert und der Schaumkörper 6 mittel einer entlang der Längsersachse 23 des Formkörperrohlings 5 traversierenden mechanischen Bearbeitungseinrichtung 7 abgedreht, während dieser um seine Längsachse 23 rotiert, um die Kontur des ersten Formkörpers 1 durch mechanische Bearbeitung zu erzeugen.

Bei diesem Verfahrensschritt ist die Kontur des Formkörpers 1 frei wählbar. Die Figur 1b zeigt das Ende dieses Verfahrensschrittes, bei dem also aus dem Formkörperrohling 5 bereits der Formkörper 1 nahezu vollständig gebildet ist. Der gebildete Formkörper 1 ist ein konvexer Formkörper.

Durch die in den Figuren 1a und 1b dargestellten Verfahrensschritte wird ein erster Formkörper 11 bereitgestellt, welcher die Kontur eines herzustellenden Innenrohrs aufweist.

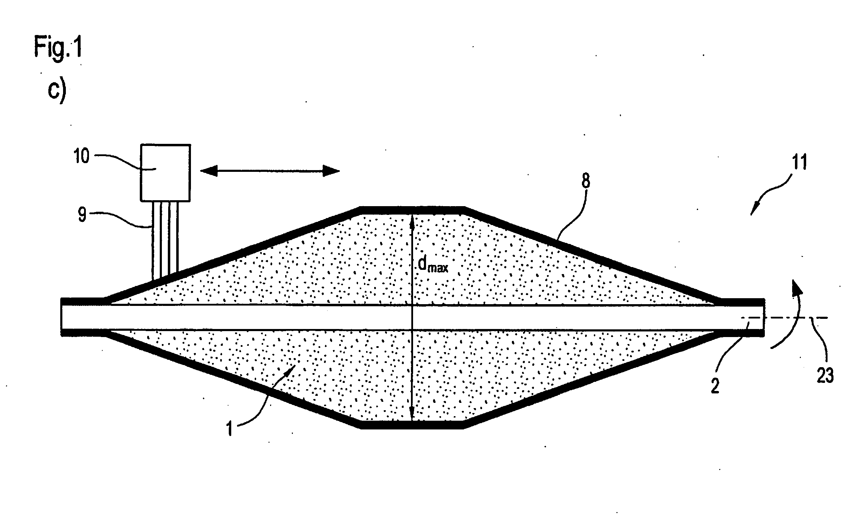

Die Figur 1c zeigt einen nachfolgendem Verfahrensschritt bei dem zur Bildung eines Walzenkerns 11 ein Innenrohr 8 auf dem Formkörper 1 durch Aufbringen eines ersten polymeren Harzmaterials auf dem ersten Formkörper 1 hergestellt wird.

In das erste polymere Harzmaterial wird erstes Fasermaterial zur Bildung ein es ersten Faser-Verbundmaterial 9 eingebettet, welches durch ein Wickelverfahren wie beispielsweise das sogenannte "Filament Winding Verfahren" mittels einer entlang der Längsachse 23 des Wickelkerns 2 traversierenden Wickelvorrichtung 10 zur Ummantelung des ersten Formkörpers 1 auf diesen aufgebracht wird, während der Formkörper 1 um seine Längsachse 23 rotiert. Wie aus der Figur 1c zu erkennen ist, ist die Kontur des ersten Formkörpers 1 derart, dass das gebildete Innenrohr 8 im Bereich der Mitte seiner Längserstreckung einen maximalen Durchmesser dₘₐₓ hat und sich in Richtung seiner beiden längsseitigen Enden abschnittweise konisch verjüngt.

Beim Wickelvorgang kann das erste Fasermaterial, abhängig von den zu erzielenden Eigenschaften des Innenrohrs 8 mit jedem beliebigen Wickelwinkel zwischen 0° und 80°, bezogen auf die Längsachse 23 des Formkörpers 1 , bevorzugt mit einem Wickelwinkel zwischen 4° und 50° aufgebracht werden.

Selbstverständlich sind auch variierende Wickelwinkel möglich, die beispielsweise von gewickelter Lage zu gewickelter Lage wechseln. Das erste Faser-Verbundmaterial 9 umfasst im vorliegenden Fall als erstes polymeres Harz beispielsweise Epoxidharz und / oder Cyanatesterharz und als erstes Fasermaterial Carbonfasern.

Ein nächster hier nicht dargestellter Verfahrensschritt kann ein mechanisches Bearbeiten des Innenrohrs 8 durch Schleifen und / oder Drehen umfassen, um eine spätere Unwucht möglichst gering zu halten. Dies kann auch ein Anbringen einer Öffnung in das Innenrohr zu Anbringen von Gewichten zur Reduzierung einer Unwucht umfassen.

Im vorliegenden Fall bleibt der erste Formkörper 1 nach Bildung des Innenrohrs 8 mit dem Innenrohr 8 verbunden und bildet den einen Verbundkörper umfassenden Walzenkern 11.

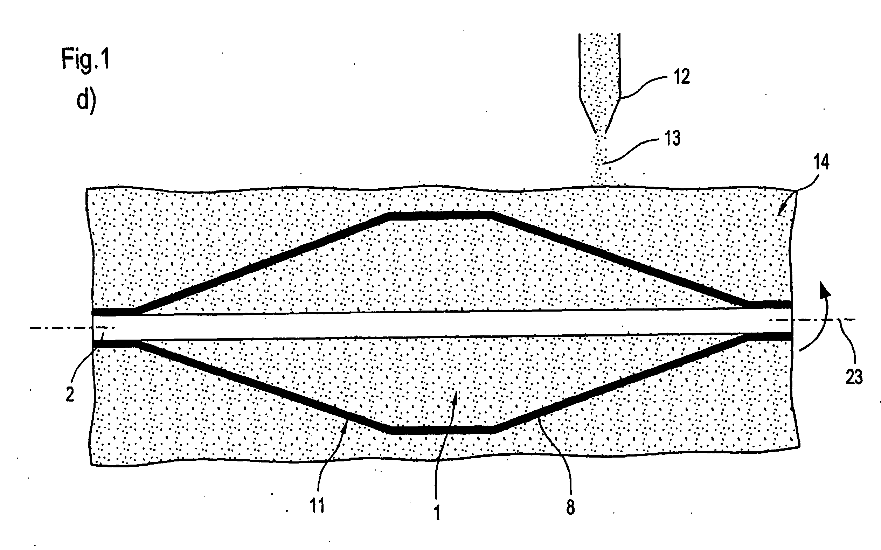

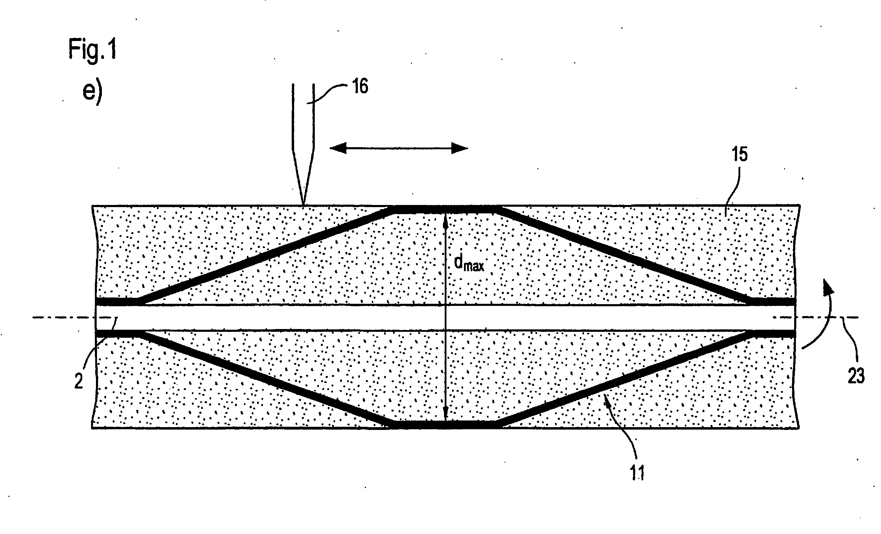

Die Figur 1d zeigt einen nachfolgenden Verfahrensschritt zur Bereitstellung eines zweiten Formkörpers 15. Hierzu wird aus einer entlang der Längsachse 23 des Walzenkerns 11 traversierenden Düse 12 ein zweites Schaummaterial 13 auf den sich um seine Längsachse 23 drehenden Walzenkern 11 aufgebracht, um einen zweiten Formkörperrohling 14 zu bilden, welcher in einem nachfolgenden und in Figur 1e gezeigten Verfahrensschritt derart abgedreht wird, dass der zweite Formkörper 15 auf dem gebildeten Innenrohr 8 außerhalb dem Bereich mit dem maximalen Durchmesser dₘₐₓ bereitgestellt wird. Hierzu wird bei um seine Längsachse 23 rotierendem Formkörperrohling 14 eine mechanische Bearbeitungsvorrichtung 16 entlang der Längsachse 23 des Walzenkerns 11 traversiert.

Selbstverständlich wäre es auch denkbar, den zweiten Formkörper 15 dadurch bereitzustellen, indem das zweite Schaummaterial 13 von Anfang an nur außerhalb des Bereich mit dem maximalen Durchmesser aufgebracht wird.

Im vorliegenden Fall wird der zweite Formkörper 15 derart auf dem gebildeten Innenrohr 8 hergestellt, dass durch den zweiten Formkörper 15 die Kontur des gebildeten Innenrohrs 8 zum maximalen Durchmesser dₘₐₓ des Innenrohrs 8 ausgeglichen wird.

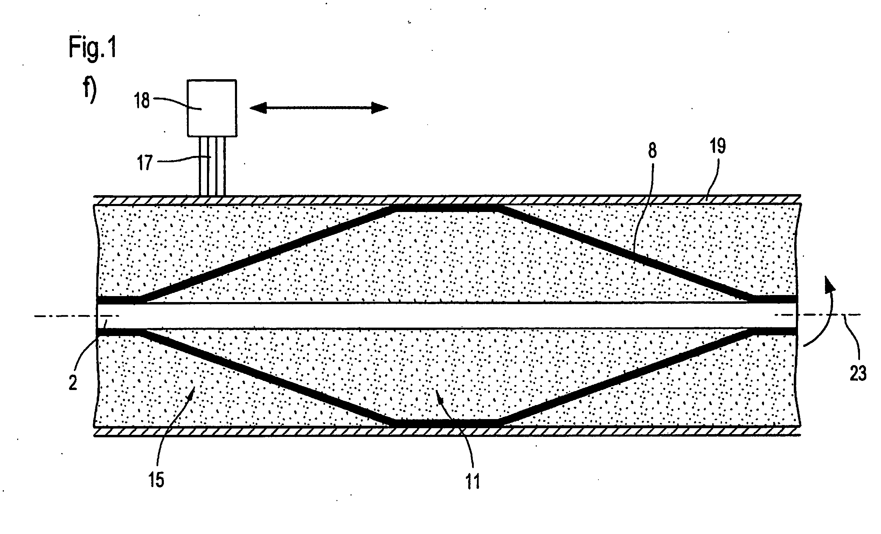

In dem in der Figur 1f dargestellten Verfahrensschritt wird ein zweites polymeres Harzmaterial zusammen mit einem zweiten Fasermaterial zur Bildung eines zweiten Faser-Verbundmaterials 17 auf den zweiten Formkörper 15 und auf dem Innenrohr 8 im Bereich seines maximalen Durchmessers dₘₐₓ aufgebracht, wodurch ein Außenrohr 19 gebildet wird und das Außenrohr 19 im Bereich des maximalen Durchmessers dₘₐₓ des Innenrohrs 8 mit dem Innenrohr 8 verbunden wird. Hierzu wird der Walzenkern 11 um seine Längsachse 23 rotiert und das zweite Faser-Verbundmaterial 17 durch ein Wickelverfahren, wie beispielsweise das sogenannte "Filament Winding Verfahren", mittels einer entlang der Längsachse 23 des Walzenkerns 11 traversierenden Wickelvorrichtung 18 auf dem zweiten Formkörper 15 und auf dem Innenrohr 8 im Bereich dessen maximalen Durchmesser dₘₐₓ aufgebracht.

Ein nächster hier nicht dargestellter Verfahrensschritt kann ein mechanisches Bearbeiten des Außenrohrs 19 durch Schleifen und / oder Drehen umfassen, um eine spätere Unwucht möglichst gering zu halten.

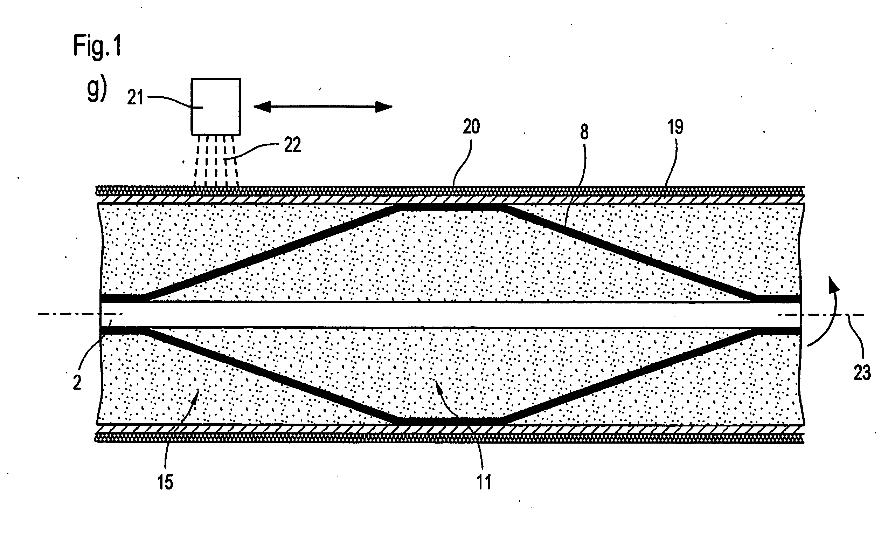

Die Figur 1g zeigt einen weiteren Verfahrensschritt, bei dem auf den gebildeten Außenrohr 19 ein Walzenbezug 20, vorzugsweise mittels eines Beschichtungsverfahrens aufgebracht wird. Hierzu traversiert eine Beschichtungsvorrichtung 21 und bringt in einem oder mehreren Schritten ein Beschichtungsmaterial auf den gebildeten Außenrohr 19 auf, während der Walzenkern 11 mitsamt dem Außenrohr 19 um die Längsachse 23 rotiert.

Der Walzenbezug 20 kann hierbei beispielhaft Polyurethan, Gummi, Faser-Verbundmaterial, Keramik, Elastomer, MetallschaumPolybutylenterephtalat umfassen, wobei das Beschichtungsverfahren beispielhaft Laminieren, Gießen, Sprühen, Faserspritzen Tape Winding Filament Winding, Flammspritzen, elektrochemisches Abscheiden umfassen kann.

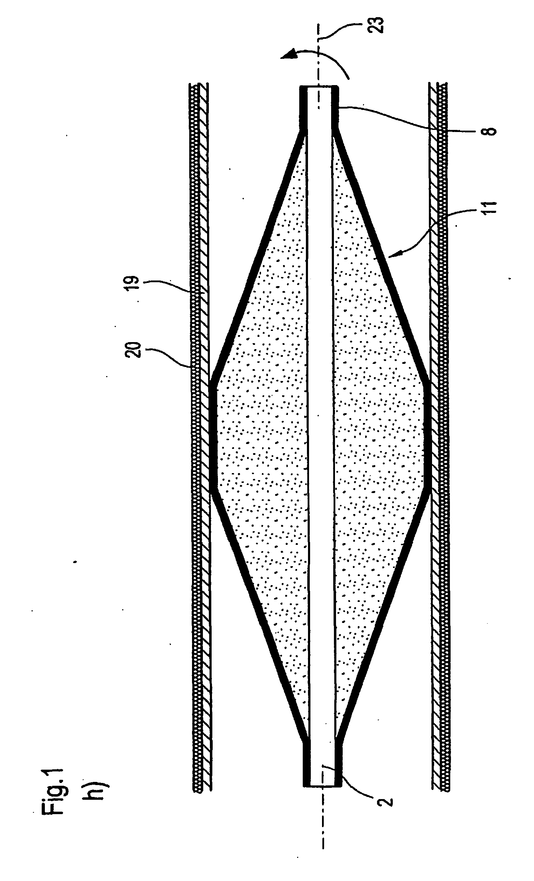

Die Figur 1h zeigt das Ergebnis, nachdem der abschnittweise zwischen dem Innenrohr 8 und dem Außenrohr 19 angeordnete zweite Formkörper 15 entfernt wurde.

## Patentansprüche

1. Verfahren zur Herstellung einer ein Innenrohr und ein das Innenrohr zumindest abschnittweise ummantelndes und abschnittweise relativ zu diesem bewegbaren Außenrohr (19) umfassenden Breitstreckwalze mit folgenden Schritten:
a) Bereitstellen eines ersten Formkörpers, welcher die Kontur des herzustellenden Innenrohrs aufweist,
b) Anbringen eines ersten polymeren Harzmaterials an den ersten Formkörper, zur Bildung des Innenrohrs (8), wobei das Innenrohr (8), zumindest einen Bereich mit einem maximalen Durchmesser (dmax) umfasst,
c) zumindest abschnittweises Bereitstellen eines zweiten Formkörpers (15) auf dem gebildeten Innenrohr (8) außerhalb des zumindest einen Bereichs mit dem maximalen Durchmesser,
d) Aufbringen eines zweiten polymeren Harzmaterials auf den zweiten Formkörper und auf dem Innenrohr (8) im Bereich seines maximalen Durchmessers, wodurch das Außenrohr (19) gebildet und das Außenrohr (19) im Bereich des maximalen Durchmessers des Innenrohrs mit dem Innenrohr (8) verbunden wird,
e) Entfernen des abschnittweise zwischen dem Innenrohr (8) und dem Außenrohr angeordneten zweiten Formkörpers.

2. Verfahren zur Herstellung einer Breitstreckwalze nach Anspruch 1,
**dadurch gekennzeichnet,**
**dass** Schritt c) wie folgt durchgeführt wird:
abschnittweises Bereitstellen eines zweiten Formkörpers auf dem gebildeten Innenrohr derart, dass durch den zweiten Formkörper zumindest
abschnittweise die Kontur des gebildeten Innenrohrs zum maximalen Durchmesser des Innenrohrs ausgeglichen wird.

3. Verfahren zur Herstellung einer Breitstreckwalze nach Anspruch 1 oder 2,
**dadurch gekennzeichnet,**
**dass** die Kontur des ersten Formkörpers derart ist, dass das gebildete Innenrohr im Bereich der Mitte seiner Längserstreckung den maximalen Durchmesser hat und sich in Richtung seiner beiden längsseitigen Enden zumindest abschnittweise verjüngt.

4. Verfahren zur Herstellung einer Breitstreckwalze nach Anspruch 1 oder 2,
**dadurch gekennzeichnet,**
**dass** die Kontur des ersten Formkörpers derart ist, dass das gebildete Innenrohr im Bereich der beiden längsseitigen Enden den maximalen Durchmesser hat und sich davon ausgehend jeweils in Richtung zur Mitte zumindest abschnittweise verjüngt.

5. Verfahren zur Herstellung einer Breitstreckwalze nach einem der vorherigen Ansprüche,
**dadurch gekennzeichnet,**
**dass** der erste und / oder der zweite Formkörper allein oder in Kombination umfasst:
Holz, Metall, Schaummaterial, insbesondere Polyurethanschaum, zelliges Material.

6. Verfahren zur Herstellung einer Breitstreckwalze nach einem der vorherigen Ansprüche,
**dadurch gekennzeichnet,**
**dass** der erste und / oder der zweite Formkörper zumindest teilweise durch ein Rotationsgussverfahren hergestellt wird.

7. Verfahren zur Herstellung einer Breitstreckwalze nach einem der vorherigen Ansprüche,
**dadurch gekennzeichnet,**
**dass** die Kontur des ersten und / oder zweiten Formkörpers durch
mechanische Bearbeitung, insbesondere durch Abdrehen oder Schleifen eines um seine Längsachse rotierenden Formkörperrohlings erzeugt wird.

8. Verfahren zur Herstellung einer Breitstreckwalze nach einem der vorherigen Ansprüche,
**dadurch gekennzeichnet,**
**dass** der erste Formkörper konkav gekrümmt ist und in diesen zur Bildung des Innenrohrs das erste Harzmaterial zumindest bereichsweise eingebracht wird.

9. Verfahren zur Herstellung einer Breitstreckwalze nach einem der Ansprüche 1 bis 6,
**dadurch gekennzeichnet,**
**dass** der erste Formkörper konvex gekrümmt ist und zur Bildung des Innenrohrs zumindest abschnittweise von dem ersten Harzmaterial ummantelt wird.

10. Verfahren zur Herstellung einer Breitstreckwalze nach einem der vorherigen Ansprüche,
**dadurch gekennzeichnet,**
**dass** in das erste polymere Harzmaterial ein erstes Fasermaterial zur Bildung eines ersten Faserverbundmaterials eingebettet und / oder in das zweite polymere Harzmaterial ein zweites Fasermaterial zur Bildung eines zweiten Faserverbundmaterials eingebettet wird.

11. Verfahren zur Herstellung einer Breitstreckwalze nach Anspruch 10,
**dadurch gekennzeichnet,**
**dass** das Fasermaterial allein oder in Kombination umfasst:
organische Fasern, Thermoplastfasern, Duroplastfasern, Elastomerfasern, anorganische Fasern.

12. Verfahren zur Herstellung einer Breitstreckwalze nach Anspruch 10 oder 11,
**dadurch gekennzeichnet,**
**dass** das erste und / oder das zweite Faserverbundmaterial durch ein Faser-Wickelverfahren auf den jeweils konvexen Formkörper aufgebracht wird.

13. Verfahren zur Herstellung einer Breitstreckwalze nach Anspruch 10 oder 11,
**dadurch gekennzeichnet,**
**dass** das erste Faserverbundmaterial durch zumindest eines der folgenden Verfahren in den konkaven Formkörper eingebracht wird:
Faserspritzen, Prepreg Methode, Einlegen zumindest einer schlauchförmigen Gewebelage.

14. Verfahren zur Herstellung einer Breitstreckwalze nach einem der vorherigen Ansprüche,
**dadurch gekennzeichnet,**
**dass** der erste Formkörper nach Bildung des Innenrohrs vom Innenrohr entfernt wird.

15. Verfahren zur Herstellung einer Breitstreckwalze nach einem der Ansprüche 1 bis 13,
**dadurch gekennzeichnet,**
**dass** der erste Formkörper nach Bildung des Innenrohrs mit dem Innenrohr verbunden bleibt und einen Verbundkörper bildet.

16. Verfahren zur Herstellung einer Breitstreckwalze nach einem der vorherigen Ansprüche,
**dadurch gekennzeichnet,**
**dass** das Außenrohr von einem Walzenbezug ummantelt wird.

17. Verfahren zur Herstellung einer Breitstreckwalze nach Anspruch 16,
**dadurch gekennzeichnet,**
**dass** der Walzenbezug durch ein Beschichtungsverfahren auf das Außenrohr aufgebracht wird.

## Claims

1. Process for producing a spreader roll comprising an inner tube and an outer tube (19) which encases the inner tube, at least in some sections, and can be moved relative to the latter, comprising the following steps:
a) providing a first moulding, which has the contour of the inner tube to be produced,
b) applying a first polymer resin material to the first moulding in order to form the inner tube (8), the inner tube (8) having at least one region with a maximum diameter (dmax),
c) at least in some sections, providing a second moulding (15) on the inner tube (8) formed, outside the at least one region having the maximum diameter,
d) applying a second polymer resin material to the second moulding and to the inner tube (8) in the region of its maximum diameter, by which means the outer tube (19) is formed and the outer tube (19) in the region of the maximum diameter of the inner tube is joined to the inner tube (8),
e) removing the second moulding arranged in some sections between the inner tube (8) and the outer tube.

2. Process for producing a spreader roll according to Claim 1, **characterized in that** step c) is carried out as follows:
in some sections, providing the second moulding on the inner tube formed in such a way that, at least in some sections, the contour of the inner tube formed is made equal to the maximum diameter of the inner tube by means of the second moulding.

3. Process for producing a spreader roll according to Claim 1 or 2, **characterized in that** the contour of the first moulding is such that the inner tube formed has the maximum diameter in the region of the centre of its longitudinal extent and tapers in the direction of its two lateral ends, at least in some sections.

4. Process for producing a spreader roll according to Claim 1 or 2, **characterized in that** the contour of the first moulding is such that the inner tube formed has the maximum diameter in the region of the two lateral ends and, starting therefrom, in each case tapers in the direction of the centre, at least in some sections.

5. Process for producing a spreader roll according to one of the preceding claims, **characterized in that** the first and/or the second moulding comprises wood, metal, foamed material, in particular polyurethane foam, cellular material, on their own or in combination.

6. Process for producing a spreader roll according to one of the preceding claims, **characterized in that** the first and/or the second moulding is at least partly produced by a rotary casting process.

7. Process for producing a spreader roll according to one of the preceding claims, **characterized in that** the contour of the first and/or the second moulding is produced by mechanical machining, in particular by turning or grinding a blank moulding rotating about its longitudinal axis.

8. Process for producing a spreader roll according to one of the preceding claims, **characterized in that** the first moulding is curved concavely and the first resin material is introduced into the latter, at least in some regions, to form the inner tube.

9. Process for producing a spreader roll according to one of Claims 1 to 6, **characterized in that** the first moulding is curved convexly and is encased by the first resin material, at least in some sections, to form the inner tube.

10. Process for producing a spreader roll according to one of the preceding claims, **characterized in that** a first fibre material is embedded in the first polymer resin material to form a first fibrous composite material and/or a second fibre material is embedded in the second polymer resin material to form a second fibrous composite material.

11. Process for producing a spreader roll according to Claim 10, **characterized in that** the fibre material comprises:
organic fibres, thermoplastic fibres, thermosetting fibres, elastomer fibres, inorganic fibres, on their own or in combination.

12. Process for producing a spreader roll according to Claim 10 or 11, **characterized in that** the first and/or the second fibrous composite material is applied to the respectively convex moulding by a fibre winding process.

13. Process for producing a spreader roll according to Claim 10 or 11, **characterized in that** the first fibrous composite material is introduced into the concave moulding by at least one of the hollowing processes:
fibre spraying, prepreg methods, the insertion of at least one tube-like fabric layer.

14. Process for producing a spreader roll according to one of the preceding claims, **characterized in that** the first moulding is removed from the inner tube after the formation of the inner tube.

15. Process for producing a spreader roll according to one of Claims 1 to 13, **characterized in that** the first moulding remains joined to the inner tube after the formation of the inner tube and forms a composite body.

16. Process for producing a spreader roll according to one of the preceding claims, **characterized in that** the outer tube is encased by a roll cover.

17. Process for producing a spreader roll according to Claim 16, **characterized in that** the roll cover is applied to the outer tube by a coating process.

## Revendications

1. Procédé de fabrication d'un rouleau élargisseur comprenant un tube intérieur et un tube extérieur (19) entourant au moins par sections le tube intérieur et mobile au moins par sections par rapport à celui-ci, comprenant les étapes suivantes:
a) préparer un premier corps de forme, qui présente le contour du tube intérieur à fabriquer;
b) appliquer une première matière de résine polymère sur le premier corps de forme, pour former le tube intérieur (8), le tube intérieur (8) comprenant au moins une région présentant un diamètre maximal (dₘₐₓ) ;
c) préparer au moins par sections un deuxième corps de forme (15) sur le tube intérieur formé (8) à l'extérieur de ladite au moins une région présentant le diamètre maximal;
d) appliquer une deuxième matière de résine polymère sur le deuxième corps de forme et sur le tube intérieur (8) dans la région de son diamètre maximal, formant ainsi le tube extérieur (19) et assemblant le tube extérieur (19) au tube intérieur (8) dans la région du diamètre maximal du tube intérieur;
e) enlever le deuxième corps de forme disposé par sections entre le tube intérieur (8) et le tube extérieur.

2. Procédé de fabrication d'un rouleau élargisseur selon la revendication 1, **caractérisé en ce que** l'étape c) est exécutée de la manière suivante:
préparer par sections un deuxième corps de forme sur le tube intérieur formé, de telle manière que le contour du tube intérieur formé soit égalisé au diamètre maximal du tube intérieur au moins par sections par le deuxième corps de forme.

3. Procédé de fabrication d'un rouleau élargisseur selon la revendication 1 ou 2, **caractérisé en ce que** le contour du premier corps de forme est tel que le tube intérieur formé présente le diamètre maximal dans la région du milieu de son extension longitudinale et se rétrécisse au moins par sections en direction de ses deux extrémités longitudinales.

4. Procédé de fabrication d'un rouleau élargisseur selon la revendication 1 ou 2, **caractérisé en ce que** le contour du premier corps de forme est tel que le tube intérieur formé présente le diamètre maximal dans la région de ses deux extrémités longitudinales et se rétrécisse à partir de celles-ci, au moins par sections, en direction du milieu.

5. Procédé de fabrication d'un rouleau élargisseur selon l'une quelconque des revendications précédentes, **caractérisé en ce que** le premier et/ou le deuxième corps de forme comprend, seul ou en combinaison: du bois, du métal, un matériau expansé, en particulier de la mousse de polyuréthane, un matériau cellulaire.

6. Procédé de fabrication d'un rouleau élargisseur selon l'une quelconque des revendications précédentes, **caractérisé en ce que** le premier et/ou le deuxième corps de forme sont fabriqués au moins en partie par un procédé de coulée rotative.

7. Procédé de fabrication d'un rouleau élargisseur selon l'une quelconque des revendications précédentes, **caractérisé en ce que** le contour du premier et/ou du deuxième corps de forme est produit par usinage mécanique, en particulier par tournage ou meulage d'une ébauche de corps de forme tournant autour de son axe longitudinal.

8. Procédé de fabrication d'un rouleau élargisseur selon l'une quelconque des revendications précédentes, **caractérisé en ce que** le premier corps de forme présente une courbure concave et la matière de résine est introduite au moins localement dans celui-ci pour former le tube intérieur.

9. Procédé de fabrication d'un rouleau élargisseur selon l'une quelconque des revendications 1 à 6, **caractérisé en ce que** le premier corps de forme présente une courbure convexe et est enveloppé au moins par sections par la première matière de résine pour former le tube intérieur.

10. Procédé de fabrication d'un rouleau élargisseur selon l'une quelconque des revendications précédentes, **caractérisé en ce qu'**une première matière fibreuse est noyée dans la première matière de résine polymère pour former un premier matériau composite avec des fibres et/ou une deuxième matière fibreuse est noyée dans la deuxième matière de résine polymère pour former un deuxième matériau composite avec des fibres.

11. Procédé de fabrication d'un rouleau élargisseur selon la revendication 10, **caractérisé en ce que** la matière fibreuse comprend, seule ou en combinaison: des fibres organiques, des fibres thermoplastiques, des fibres thermodurcissables, des fibres élastomères, des fibres inorganiques.

12. Procédé de fabrication d'un rouleau élargisseur selon la revendication 10 ou 11, **caractérisé en ce que** le premier et/ou le deuxième matériau composite avec des fibres sont appliqués sur le corps de forme respectivement convexe par un procédé de bobinage de fibres.

13. Procédé de fabrication d'un rouleau élargisseur selon la revendication 10 ou 11, **caractérisé en ce que** le premier matériau composite avec des fibres est introduit dans le corps de forme concave par au moins un des procédés suivants: projection des fibres, méthode de préimprégnation, pose d'au moins une garniture de tissu en forme de tuyau.

14. Procédé de fabrication d'un rouleau élargisseur selon l'une quelconque des revendications précédentes, **caractérisé en ce que** le premier corps de forme est retiré du premier tube après la formation du premier tube.

15. Procédé de fabrication d'un rouleau élargisseur selon l'une quelconque des revendications 1 à 13, **caractérisé en ce que** le premier corps de forme reste assemblé au tube intérieur après la formation du tube intérieur et forme un corps composite.

16. Procédé de fabrication d'un rouleau élargisseur selon l'une quelconque des revendications précédentes, **caractérisé en ce que** le tube extérieur est enveloppé d'un revêtement de cylindre.

17. Procédé de fabrication d'un rouleau élargisseur selon la revendication 16, **caractérisé en ce que** le revêtement de cylindre est déposé sur le tube extérieur par un procédé de revêtement.
